Europäisches Patentamt

European Patent Office

Office européen des brevets

(19)

(11) Veröffentlichungsnummer: **0 248 926 B1**

(12) **EUROPÄISCHE PATENTSCHRIFT**

(45) Veröffentlichungstag der Patentschrift: **20.03.91**

(51) Int. Cl.5: **A01D 41/14**

(21) Anmeldenummer: **86107885.5**

(22) Anmeldetag: **10.06.86**

(54) Erntebergungsvorrichtung für Erntebergungsmaschinen.

(43) Veröffentlichungstag der Anmeldung:
**16.12.87 Patentblatt 87/51**

(45) Bekanntmachung des Hinweises auf die
Patenterteilung:
**20.03.91 Patentblatt 91/12**

(84) Benannte Vertragsstaaten:
**DE FR GB IT**

(56) Entgegenhaltungen:
EP-A- 0 160 823        FR-A- 2 135 546
FR-A- 2 517 926        FR-A- 2 572 880
GB-A- 773 685          US-A- 1 903 577
US-A- 2 079 530        US-A- 2 317 127
US-A- 3 514 937        US-A- 3 662 525
US-A- 4 438 619        US-A- 4 441 307

(73) Patentinhaber: **DEERE & COMPANY**
**1 John Deere Road**
**Moline, Illinois 61265(US)**

(72) Erfinder: **Emmert, Walter**
**Danziger Strasse 9**
**W-6662 Contwig(DE)**

(74) Vertreter: **Feldmann, Bernhard et al**
**DEERE & COMPANY European Office, Patent**
**Department Steubenstrasse 36-42 Postfach**
**503**
**W-6800 Mannheim 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Erntebergungsvorrichtung mit einem Schneidwerk für Mähdrescher oder ähnliche Erntebergungsmaschinen, wobei unterhalb der Erntebergungsvorrichtung sich in Fahrtrichtung längs erstreckende, in der Höhe einstellbare und jeweils aus einem Stegteil und mindestens einem Seitenteil bestehende Gleitelemente vorgesehen sind, die im Einsatz mit ihren Stegteilen über den Boden schleifen können, die Erntebergungsvorrichtung abstützen und beidenends mit der Erntebergungsvorrichtung verbunden sind, wobei zur Höheneinstellung an der Unterseite der Erntebergungsvorrichtung mit mehreren Anschlußbohrungen versekene Halterungen vorgesehen sind, die je weils mittels eines in eine anschlußbohrung eingreifenden Befestigungsbolzens mit dem einen Ende eines jeden Gleitelementes verbindbar sind.

Bei dieser bekannten Erntebergungsvorrichtung (DE-A-2 121 680) sind die mit Bezug auf die Fahrtrichtung vorn liegenden Enden der Gleitelemente mit einer an der Unterseite der Erntebergungsvorrichtung angebrachten dünnwandigen Blechleiste verschraubt, während die rückwärtigen Enden der Gleitelemente über Distanzstücke und Stecker mit den Anschlußbohrungen in den Halterungen an der Unterseite der Erntebergungsvorrichtung verbunden sind. Durch Umstecken der Distanzstücke erfolgt eine Höhenverstellung, wobei am vorderen Ende der Gleitelemente dabei auftretende Winkeländerungen von der Blechleiste als elastische Verformung aufgenommen werden. Die Verformung der Blechleiste ist bereits als ein schwerwiegender Nachteil anzusehen. Hinzu kommt aber noch, daß bei einer Höhenverstellung die Schnitthöhe des Schneidwerks nicht verändert wird und die Gleitelemente nicht mehr in ihrer vollen Länge auf dem Boden satt aufliegen, wodurch der das Schneidwerk aufnehmende Messerbalkenträger Erde schiebt und Erde bzw. Steine von dem Schneidwerk aufgenommen werden können. Außerdem stellt die Verschraubung der Gleitelemente mit der dünnwandigen Blechleiste eine labile Verbindung dar, aufgrund derer sich die Schnitthöhe im Einsatz ändern kann, was ebenfalls unerwünscht ist.

Andererseits ist es bei einem Maispflücker mit einer Vorrichtung zum Aufnehmen von auf den Erdboden abgefallenen Maiskolben (US-A-4 438 619) nicht neu, zwischen den Pflückwalzen Aufnehmer für die abgefallenen Maiskolben anzuordnen, die über den Boden schleifen und hierzu an Parallelogrammlenkern angeschlossen sind. Die Erntebergungsvorrichtung in Form des Pflückvorsatzes läßt sich nicht über die Parallelogrammlenker in der Höhe verstellen.

Auch ist es bei einer Vorrichtung zum Abschneiden und nachfolgenden Ablegen von Maisstengeln (US-A-2 079 530) bereits bekannt, Gleitelemente an ihrem rückwärtigen Ende an dem Rahmenwerk der Vorrichtung schwenkbar anzuschließen, wobei die vorderen Enden der Gleitelemente in am Rahmenwerk schwenkbar angeordneten Verbindungsarmen längsverschiebbar geführt sind. Die Verbindungsarme weisen hierzu Langlochöffnungen auf, und über eine Höheneinstellvorrichtung läßt sich die Winkellage der Gleitelemente gegenüber dem Rahmenwerk verstellen, wobei die Schnitthöhe des Schneidwerks geändert wird. Bei eingestellter Höheneinstellvorrichtung bleibt zwar die Schnitthöhe konstant, jedoch erlaubt der komplizierte Aufbau keine Parallelverstellung. Die Gewichtsübertragung auf die Gleitelemente ist darüber hinaus äußerst ungünstig, da diese ausschließlich über die mittig angeordnete Höheneinstellvorrichtung und den rückwärtigen Schwenkanschluß erfolgt.

Schließlich ist noch auf ein bekanntes Vorsatzgerät zum Abernten von Sojabohnen (US-A-3 662 525) zu verweisen, das an die Erntebergungsvorrichtung eines Mähdreschers schwenkbar um eine horizontal verlaufende Achse angeschlossen ist. Im Einsatz wird das Vorsatzgerät über Gleitelemente bzw. -kufen auf dem Boden geführt, wozu diese an ihrem vorderen Ende in verschiedenen Stellungen mit dem Vorsatzgerät schwenkbar verbunden werden können. An den rückwärtigen Bereich der Gleitelemente sind die vorderen Enden von Haltearmen vertikal schwenkbar angeschlossen, die an ihren rückwärtigen Enden Langlochöffnungen zur Befestigung mit dem Vorsatzgerät über eine Schraubverbindung aufweisen. Insbesondere durch die Schraubverbindung und den gelenkigen Anschluß der Haltearme an die Gleitelemente ist deren Aufhängung nicht sicher, so daß während des Einsatzes Schnitthöhenveränderungen zu befürchten sind.

Die mit der Erfindung zu lösende Aufgabe wird darin gesehen, die an der Unterseite der Erntebergungsvorrichtung vorgesehenen Gleitelemente derart anzuordnen, daß bei einer Höhenverstellung der Gleitelemente die Winkellage des an der Erntebergungsvorrichtung vorgesehenen Schneidwerks nicht verändert wird. Diese Aufgabe ist dadurch gelöst worden, daß die lagerung des anderen Endes eines jeden Gleitelementes aus jeweils einer mit Bezug auf die Standfläche des Mähdreschers geneigt verlaufenden und sich mit ihrer größten Abmessung in Fahrtrichtung erstreckenden Langlochöffnung und einer darin geführten Achse besteht wobei jede Langlochöffnungen und die zugehörigen Anschlußbohrungen in den Halterungen derart angeordnet sind, daß eine parallele Höhenverstellung der Gleitelemente möglich ist. Auf diese Weise ist eine äußerst einfache, kostengünstige und die Parallelverstellung ermöglichende Aufhängung der Gleitelemente geschaffen, die gewährleistet, daß das große Gewicht der Erntebergungsvorrichtung an den beiden Enden der Gleitelemente aufgenommen wird. Zur Verstellung braucht lediglich die Verbindung mit den Halterungen gelöst zu werden und bei einer anderen Anschlußbohrung wieder hergestellt zu werden, wobei die Langlochöffnungen eine Verschiebung ermöglichen. Im Bereich der Langlochöffnungen braucht dabei die Verbindung nicht gelöst zu werden. Im ganzen gesehen können mit dieser Anordnung die Gleitelemente je nach dem Mähdreschereinsatz bzw. bei entsprechender Änderung der Mähdrescherbereifung in kürzester Zeit verstellt werden, um die Schnitthöhe des Schneidwerks in die gewünschte Lage zu verbringen. Bei der Parallelverstellung ändert sich die Winkellage des Schneidwerks nicht, und die Schnitthöhe bleibt beim Einsatz konstant, da die Aufhängung der Gleitelemente keine beim Einsatz möglicherweise nachgebenden Gelenkstellen aufweist.

Zweckmäßig können die Langlochöffnungen in den Seitenteilen der Gleitelemente vorgesehen werden.

Wegen der besseren Zugänglichkeit hat es sich als vorteilhaft gezeigt, wenn die Langlochöffnungen mit Bezug auf die Fahrtrichtung im vorderen Bereich der Gleitelemente vorgesehen werden.

Im folgenden wird die Erfindung anhand von lediglich einen Ausführungsweg darstellenden Zeichnungen näher erläutert. Es zeigt:

Fig. 1    eine schematische Darstellung eines Mähdreschers in der Seitenansicht,

Fig. 2    eine Teilansicht der Unterseite der Erntebergungsvorrichtung mit dem zugehörigen Schneidwerk und verstellbaren Gleitkufen gemäß Fig. 1 in perspektivischer Darstellung,

Fig. 3    eine schematische Darstellung der rechten Seite der Erntebergungsvorrichtung mit den zugehörigen Aufnahmeteilen zur Verstellung der Gleitkufen.

In der Zeichnung ist mit 10 ein selbstfahrender Mähdrescher bezeichnet, der mit vorderen Laufrädern 12 und hinteren steuerbaren Laufrädern 14 ausgerüstet ist. Am vorderen Ende des Mähdreschers 10 befindet sich ein Schrägfördergehäuse 16 mit einer Erntebergungsvorrichtung 18, an deren vorderen Ende ein Schneidwerk 20 angeschlossen ist. Das Schneidwerk 20 weist zahlreiche nebeneinander angeordnete Träger 28 auf, zwischen denen ein oder mehrere Gleitelemente bzw. Gleitkufen 26 angeordnet sein können. Die Träger sind über in der Zeichnung nicht dargestellte Querstreben und über einen Boden 29 miteinander verbunden.

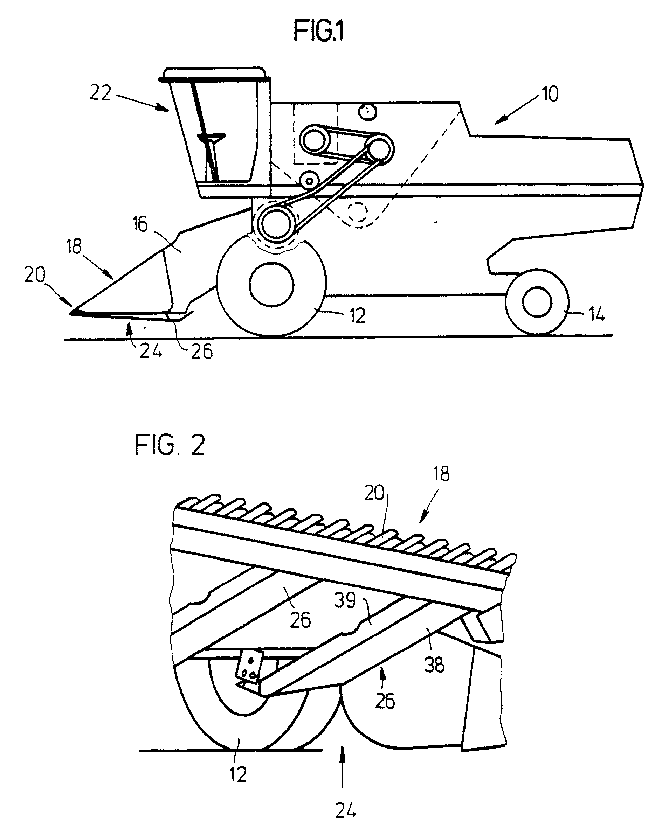

Wie aus den Figuren 1 und 2 hervorgeht, befinden sich an der Unterseite 24 der Erntebergungsvorrichtung 18 die Gleitelemente bzw. Gleitkufen , mittels derer die Erntebergungsvorrichtung 18 im Arbeitseinsatz auf dem Boden abstützbar ist bzw. geführt wird. Die einzelnen Gleitelemente 26 sind höhenverstellbar an der Unterseite der Erntebergungsvorrichtung 18 angeordnet, damit beispielsweise bei einem Auswechseln der Laufräder bzw. der Reifen gegen einen anderen Durchmesser die Gleitkufen entsprechend verstellt werden können, um somit den Bodenabstand des Schneidwerks 20 auch bei unterschiedlicher Reifengröße konstant zu halten.

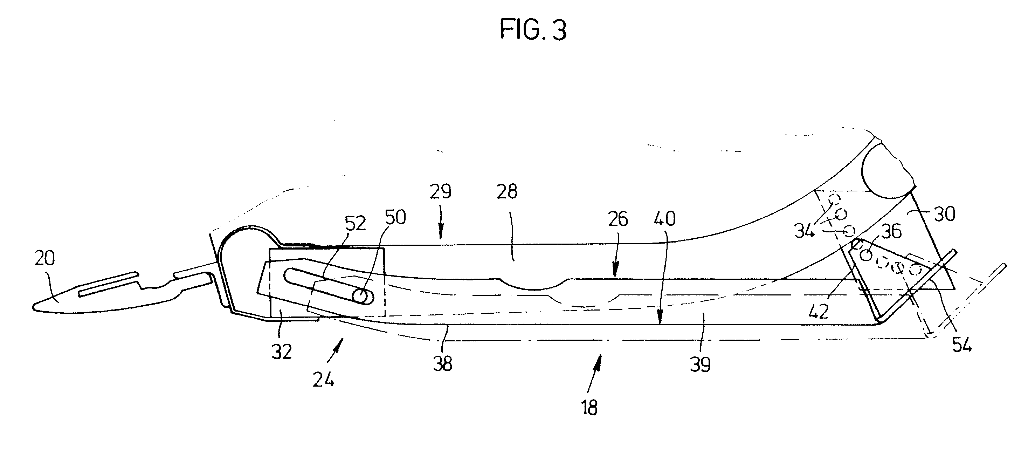

Die einzelnen Gleitelemente 26 sind, wie aus Fig. 3 hervorgeht, in einer ersten hinteren und zweiten vorderen Halterung 30, 32 aufgenommen. Die erste Halterung 30 ist im hinteren Bereich und die zweite Halterung 32 im vorderen Bereich an der Unterseite 24 der Erntebergungsvorrichtung 18 angeordnet. Dabei ist es möglich, daß jeweils nur eine vordere und eine hintere Halterung 32, 30 zu Aufnahme der Gleitelemente 26 vorgesehen sein kann. Je nach Beschaffenheit und Ausbildung der Gleitelemente 26 könen auch jeweils zwei oder mehrere Halterungen im vorderen bzw. im hinteren Bereich der Erntebergungsvorrichtung 18 vorgesehen werden, um somit eine einwandfreie verwindungssteife Aufnahme für jedes Gleitelement zu schaffen. Im Ausführungsbeispiel sind jeweils zwei vordere und zwei hintere Halterungen 32, 30 vorgesehen. In den Figuren 2 und 3 sind mit Bezug auf die Fahrtrichtung jeweils die linken Halterungen 30, 32 dargestellt.

Die erste Halterung 30 ist mit Bezug auf die Standfläche des Mähdreschers 10 nach hinten geneigt verlaufend angeordnet und weist zahlreiche unter- und je nach Ausbildung der Halterung 30 auch nebeneinander angeordnet Anschlußbohrungen 34 bzw. Gewindebohrungen bzw. Langlochöffnungen zur Aufnahme von Befestigungsbolzen 36 auf. Die einzelnen Anschlußbohrungen 34 können auch in zwei hintereinander liegenden Reihen angeordnet sein, um somit relativ viele Anschlußbohrungen auf der Halterung vorsehen zu können. Dabei verläuft eine durch die einzelnen Mittelpunkte der vorderen Reihe der Anschlußbohrung gezogene Linie auf einer geneigt verlaufenden Ebene, die mit der Standfläche der Erntebergungsmaschine einen nach vorne hin offenen, jedoch spitzen Winkel einschließt.

Wie aus Fig. 2 und Fig. 3 hervorgeht, bestehen die Gleitelemente 26 aus einem Boden 38 mit aufrechtstehenden Versteifungen bzw. Seitenteilen 39, die den Boden beiderseits begrenzen. Auf der Oberseite 40 am hinteren Ende des Bodens 38 eines jeden Gleitelementes 26 sind ebenfalls entsprechende Halterungen 42 vorgesehen, die zur Aufnahme der Befestigungsbolzen 36 mit einer entsprechenden Anschlußbohrung versehen und auf der gleichen Ebene wie die Seitenteile 39 angeordnet sind. Die Halterungen 30 sowie die Halterung 42 können jeweils aus einem dünnwandigen Blechteil gebildet sein. Die Halterungen 30 können mit dem Boden 29 der Erntebergungsvorrichtung 18 bzw. deren Trägern 28 und die Halterungen 42 mit der Oberseite 40 der Gleitelemente 26 verschraubt bzw. verschweißt sein.

Im vorderen Bereich des Gleitelementes 26 hinter dem Schneidwerk 20 befindet sich die zweite Halterung 32, die zur Aufnahme einer quer zur Fahrtrichtung verlaufenden Achse 50 bzw. eines Befestigungsbolzens dient. Sind mehrere Halterungen 32 nebeneinander angeordnet, so kann anstelle mehrerer Befestigungsbolzen 50 zur Verbindung bzw. Führung des Gleitelementes 26 eine durchgehende Achse vorgesehen sein, auf der das oder die Gleitelemente 26 geführt sind. Die vordere Halterung 32 kann ebenfalls wie die zugehörige hintere Halterung 30 jeweils im Bereich der Außenkante des Gleitelementes 26 angeordnet sein.

Die in der Halterung oder den Halterungen 32 aufgenomme Achse 50 ist in einer bzw. mehreren Langlochöffnungen 52 aufgenommen, die jeweils in dem entsprechenden Seitenteil 39 der Gleitelementes 26 vorgesehen ist bzw. sind.

Wie aus Fig. 3 hervorgeht, erstreckt sich jeder Seitenteil 39 über die gesamte Länge des Gleitelementes 26. Bei relativ breiten Gleitelementen 26 sind auf dem Boden 38 neben den Seitenteilen 39 zahlreiche nebeneinander angeordnete und parallel zueinander verlaufende nicht dargestellte Stege vorgesehen, die zur Versteifung des Bodens 38 des Gleitelementes 26 dienen und zum anderen im vorderen Bereich jeweils die entsprechenden Langlochöffnungen 52 aufweisen können.

Am hinteren Ende weist jedes Gleitelement 26 eine nach hinten ansteigende, geneigt verlaufende Rückwand 54 auf, die mit dem Gleitelement 26 bzw. dessen Boden 38 fest verbunden ist. Jeder Seitenteil 39 kann sich bis an die Rückwand 54 heran erstrecken und auch mit dieser fest verbunden sein. Der Seitenteil 39 kann in diesem Fall die hintere Halterung 42 ersetzen und zur Aufnahme der Befestigungsbolzen 36 mit Langlochöffnungen oder Anschlußbohrungen versehen sein.

Soll ou beispielsweise die Gleitelemente 26 nach oben oder unten verstellt werden, so brauchen lediglich die hinteren Befestigungsbolzen 36 aus ihren Anschlußbohrungen 34 herausgenommen zu werden, so daß dann das gesamte Gleitelement bzw. die über dem Boden 38 miteinander verbundenen Seitenteile 39 über die Langlochöffnung 52 auf der Achse 50 parallel verschoben werden, bis das jeweilise Gleitelement seine gewünschte Lage eingenommen hat. Danach wird es so ausgerichtet, daß die Anschlußbohrung der Halterung 42 mit einer Anschlußbohrung 34 der Halterung 30 übereinstimmt. Die Lage der einzelnen Anschlußbohrungen 34 in der Halterung 30 und die Anschlußbohrungen in der Halterung 42 sind dabei so gewählt, daß bei Parallelverstellung des Gleitelementes 26 jeweils die zugehörigen Anschlußbohrungen untereinander fluchten, so daß dann der Befestigungsbolzen 36 in die Anschlußbohrungen eingeführt werden kann. Wird beispielsweise das Gleitelement 26 in der Langlochöffnung 52 auf der Achse 50 nach unten verschoben, so ändert sich der Abstand zwischen der Unterseite 24 der Erntebergungsvorrichtung 18 und der Bodenoberfläche und somit auch der Abstand zwischen der Unterseite des Schneidwerkes 20 und der Bodenoberfläche. Durch die Parallelverstellung des Gleitelementes bzw. der Gleitelemente 26 wird gewährleistet, daß bei Abstützung des Gleitelementes 26 auf dem Boden die Neigung des Schneidwerkes 20 sich nicht verändert, gleich welche Höhenlage das bzw. die Gleitelemente 26 eingenommen haben.

Anstelle der beiden Halterungen 30 und 32, die zur Aufnahme der Gleitelemente 26 dienen, können beispielsweise auch Parallelogrammlenker vorgesehen sein, um somit eine Parallelverstellung der Gleitelemente 26 zu gewährleisten. Die Parallelogrammlenker werden hierzu einenends an das Gleitelement 26 und anderenends an die Erntebergungsvorrichtung 18 gelenkig angeschlossen. Darüber hinaus ist es auch möglich, zwischen der Erntebergungsvorrichtung 18 und den Gleitelementen 26 bzw. den auf den Gleitelementen angeordneten Halterungen 32, 42 Stellmotoren vorzusehen, mittels derer die Gleitelemente 26 verstellt werden können. Dabei kann beispielsweise die hintere Halterung 42 ebenfalls als Stellmotor ausgebildet sein und somit die Funktion dieser Halterung übernehmen. Die Verwendung eines Stellmotors, die jedoch geringfügig aufwendiger ist als die Verwendung von Befestigungsbolzen, ermöglicht auch eine Verstellung der Gleitelemente 26 vom Fahrerstand aus, um somit eine schnelle Anpassung der Erntemaschine an die Bodenverhältnisse vornehmen zu können, wenn dies erforderlich ist.

Die im Ausführungsbeispiel dargestellten Gleitelemente 26 können an Erntebergungsmaschinen oder an Erdbewegungsmaschinen angeordnet sein, die mit entsprechenden Arbeitswerkzeugen ausgerüstet sind und die dicht über der Oberfläche geführt werden sollen.

## Ansprüche

1.   Erntebergungsvorrichtung (18) mit einem Schneidwerk (20) für Mähdrescher (10) oder ähnliche Erntebergungsmaschinen, wobei unterhalb der Erntebergungsvorrichtung (18) sich in Fahrtrichtung längs erstreckende, in der Höhe einstellbare und jeweils aus einem Stegteil und mindestens einem Seitenteil (39) bestehende Gleitelemente (26) vorgesehen sind, die im Einsatz mit ihren Stegteilen über den Boden schleifen können, die Erntebergungsvorrichtung (18) abstützen und beidenends mit der Erntebergungsvorrichtung (18) verbunden sind, wobei zur Höheneinstellung an der Unterseite der Erntebergungsvorrichtung (18)it mehreren Anschlußbohrungen (34) versehene Halterungen (30) vorgesehen sind, die jeweils mittels in eine Anschlußbohrung (34) eingreifenden Befestigungsbolzens (36) mit dem einen Ende eines jeden Gleitelementes (26) verbindbar sind, dadurch gekennzeichnet, daß die Lagerung des anderen Endes eines jeden Gleitelementes (26) aus jeweils einer mit Bezug auf die Standfläche des Mähdreschers (10) geneigt verlaufenden und sich mit ihrer größten Abmessung in Fahrtrichtung erstreckenden Langlochöffnung (52) und einer darin geführten Achse (50) besteht wobei jede Langlochöffnung (52) und die zugehörigen Anschlußbohrungen (34) in den Halterungen (30) derart angeordnet sind, daß eine parallele Höhenverstellung der Gleitelemente (26) möglich ist.

2. Erntebergungsvorrichtung nach Anspruch 1, dadurch gekennzeichnet, daß die Langlochöffnungen (52) in den Seitenteilen (39) der Gleitelemente (26) vorgesehen sind.

3. Erntebergungsvorrichtung nach Anspruch 1 oder 2, dadurch gekennzeichnet, daß die Langlochöffnungen (52) mit Bezug auf die Fahrtrichtung im vorderen Bereich der Gleitelemente (26) vorgesehen sind.

**Claims**

1. Harvesting device (18) with a cutterhead (20) for combine harvesters (10) or similar harvesting machines, wherein there are provided beneath the harvesting device (18) slide elements (26) extending in the direction of travel, audjustable in height and each consisting of a web part and at least one side part (39), which slide elements can slide along the ground with their web parts in operation, support the harvesting device (18) and are connected at both ends with the harvesting device (18), wherein there are provided for the height adjustment, on the underside of the harvesting device (18) supports (30) with a plurality of coupling bores (34), which can be connected to the one end of each slide element (26) in each case by means of a fixing pin (36) engaging in a coupling bore (34), characterized in that the mounting of the other end of each slide element (26) consists in each case of a slot aperture (52) running at an inclination to the standing surface of the combine harvester (10) and extending with its largest dimension in the direction of travel, and a spindle (50) guided therein, each slot aperture (52) and the associated coupling bores (34) being so arranged in the supports (30) that a parallel height adjustment of the slide elements (26) is possible.

2. Harvesting device according to claim 1, characterized in that the slot apertures (52) are provided in the side parts (39) of the slide elements (26).

3. Harvesting device according to claim 1 or 2, characterized in that the slot apertures (52) are provided in the front region of the slide elements (26) relative to the direction of travel.

**Revendications**

1. Dispositif de moissonnage (18) comportant un outil de coupe (20) pour des moissonneuses-batteuses (10) ou des machines de moissonnage similaires, et dans lequel sont prévus des éléments glissants (26), qui s'étendent audessous du dispositif (18) de moissonnage, dans la direction de déplacement, sont réglables en hauteur, sont constitués respectivement par une partie en forme de barrette et au moins une partie latérale (39), peuvent frotter sur le sol, lors de leur utilisation, par leurs parties formant barrettes, soutiennent le dispositif (18) de moissonnage et sont reliés, à leurs deux extrémités, à ce dispositif, tandis que des éléments de fixation (30) comportant plusieurs perçages de raccordement (34) pour le réglage en hauteur sont prévus sur la face inférieure du dispositif (18) de moissonnage, lesquels éléments de fixation peuvent être reliés, respectivement au moyen d'un boulon de fixation (36) qui s'engage dans un perçage de raccordement (34), par l'une des extrémités de chaque élément glissant (26), lequel dispositif de moissonnage est caractérisé en ce que le logement de l'autre extrémité de chaque élément glissant (26) est constitué respectivement par une ouverture en forme de trou allongé (52), qui est inclinée par rapport à la surface d'appui de la moissonneuse-batteuse (10) et dont la dimension la plus grande s'étend dans la direction de déplacement, et par un axe (50) guidé dans cette ouverture, chaque ouverture en forme de trou allongé (52) et les perçages de raccordement associés (34) étant disposés dans les éléments de fixation (30) de manière à permettre un réglage en hauteur des éléments glissants (26), parallèlement à eux-mêmes.

2. Dispositif de moissonnage selon la revendication 1, caractérisé en ce que les ouvertures en forme de trous allongés (52) sont prévues dans les parties latérales (39) des éléments glissants (36).

3. Dispositif de moissonnage selon la revendication 1 ou 2, caractérisé en ce que les ouvertures en forme de trous allongés (52) sont prévues dans la partie avant des éléments glissants (26), par rapport au sens de déplacement.

## FIG.1

## FIG. 2

FIG. 3